# DEMANDE DE BREVET EUROPEEN

(11) **EP 1 209 801 A1**
(43) Date de publication de la demande: **29.05.2002**
(21) Numéro de dépôt: 01403027.4
(22) Date de dépôt: 26.11.2001
(51) Int. Cl.: H02K 5/24, H02K 5/20

(54) **Stator de machine tournante électrique**

(30) Priorité: 24.11.2000 FR 0015189
(71) Demandeur: MOTEURS LEROY-SOMER, 16000 Angouleme (FR)
(72) Inventeur: Condamin, Dominique, 16000 Angouleme (FR); Gaste, Jean, 16000 Angouleme (FR); Murzeau,Philippe, 16000 Angouleme (FR); Boulai, Eric, 16160 Gond Pontouvre (FR)
(74) Mandataire: Tanty, François

(57) **Abrégé**

La présente invention concerne un stator de machine électrique tournante, notamment de machine électrique tournante à réluctance variable, comprenant un corps de stator comportant un paquet de tôles statoriques et une première et une deuxième pièces concentriques emboîtées et disposées à jeu autour du corps de stator, des éléments élastiques d'amortissement étant disposés entre les deux pièces, caractérisé par le fait que les éléments élastiques d'amortissement (8,9) sont disposés circonférentiellement autour de la pièce (2) la plus intérieure des deux entre la surface extérieure de cette pièce et la surface intérieure en regard de l'autre pièce (3), et par le fait que les mouvements relatifs entre les deux pièces sont limités axialement et circonférentiellement par des moyens d'arrêt (4) offrant des propriétés amortissantes.

## Description

La présente invention est relative à un stator de machine tournante électrique, telle qu'un moteur à réluctance variable.

Les machines tournantes sont constituées pour l'essentiel d'un rotor et d'un stator, ce dernier étant relié à une structure d'accueil directement ou par l'intermédiaire de flasques, le rotor étant monté tournant à l'intérieur du stator.

Les machines tournantes, et plus particulièrement les machines électriques tournantes à réluctance variable, ont comme défaut important d'être bruyantes par suite des bruits et vibrations générés principalement par le stator.

Pour filtrer et amortir les bruits et les vibrations générés par le stator d'une machine tournante, il a déjà été proposé dans EP-A-0 957 564 de réaliser le circuit magnétique du stator en deux pièces cylindriques concentriques emboîtées à jeu, lesdites pièces étant maintenues espacées entre elles par une pluralité d'éléments d'amortissement, allongés, élastiques, s'étendant en direction axiale, c'est-à-dire le long de génératrices des deux pièces cylindriques emboîtées constituant le circuit magnétique du stator.

Un autre problème lié aux machines tournantes, notamment les machines électriques tournantes à réluctance variable, est le dégagement de chaleur en fonctionnement, nécessitant un refroidissement.

La réalisation connue d'éléments élastiques allongés d'amortissement disposés le long de génératrices des deux pièces constituant le circuit magnétique du stator, empêche le refroidissement dans de bonnes conditions du stator par la surface extérieure de son circuit magnétique, à cause de la présence d'un espace d'air entre les deux parties cylindriques.

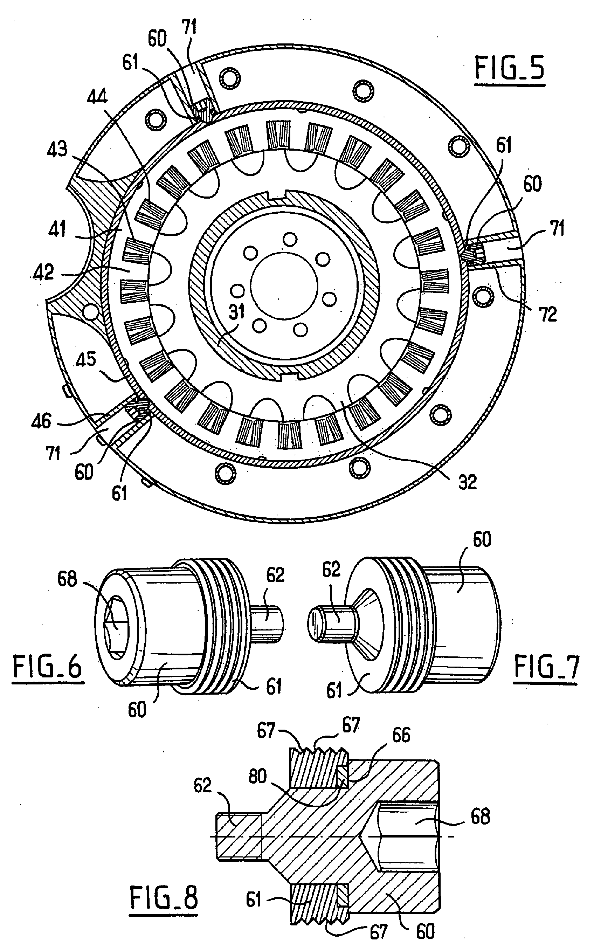

On connaît par la demande britannique GB 2 293 695 un moteur à réluctance variable comportant des éléments amortisseurs de vibrations entre le stator et le carter du moteur. Dans le mode de réalisation de la figure 5 de cette demande, un anneau fixé sur le carter exerce une force dirigée axialement sur le stator pour le maintenir en appui contre un élément amortisseur s'interposant entre le stator et un épaulement du carter. Un tel anneau est préjudiciable à l'isolation acoustique du moteur car conducteur des vibrations. De plus, le moteur décrit sur la figure 5 ne permet pas la transmission d'un couple élevé entre le stator et le carter.

La présente invention se propose de réaliser un stator de machine tournante permettant d'assurer un bon amortissement des bruits et des vibrations tout en permettant le cas échéant d'intégrer un circuit de refroidissement au niveau de l'enveloppe du stator.

Le stator selon la présente invention comporte un corps de stator et au moins une première et une deuxième pièces concentriques emboîtées à jeu et disposées autour du corps du stator et se caractérise par le fait d'une part que des éléments élastiques d'amortissement sont disposés circonférentiellement autour de la pièce la plus intérieure des deux, entre la surface extérieure de cette pièce et la surface intérieure en regard de l'autre pièce, et d'autre part par le fait que les mouvements axiaux et en rotation entre les deux pièces sont limités par des moyens d'arrêt offrant des propriétés amortissantes.

Les éléments d'amortissement peuvent être avantageusement des joints annulaires, par exemple en caoutchouc, fermés ou non, le cas échéant pourvus d'une armature interne, ces joints pouvant être des joints toriques ou présenter une section quelconque, par exemple carrée, rectangulaire, à lèvres, en accent circonflexe ou autre.

Les éléments d'amortissement peuvent également être constitués de plots répartis circonférentiellement. Dans ce cas, les éléments d'amortissement peuvent s'interposer entre les deux pièces concentriques par exemple en plus de trois points angulairement séparés de plus d'une dizaine de degrés, à condition de préférence que le rapport de 360° à l'écart angulaire choisi ne soit pas un multiple entier du nombre de pôles du stator.

Les éléments d'amortissement peuvent s'interposer entre les deux pièces concentriques en plusieurs points répartis régulièrement ou non, le long d'une ou plusieurs circonférences.

Les moyens d'arrêt peuvent être constitués par exemple par des goupilles, vis ou pions constitués totalement ou partiellement de matériaux aux propriétés amortissantes et de manière générale par toute pièce aux propriétés amortissantes.

On comprend que la mise en place de joints circonférentiels fermant l'espace délimité entre les surfaces en regard des première et deuxième pièces concentriques du stator, permet de réaliser dans cet espace et/ou dans les surfaces en regard un conduit pour le passage d'un liquide caloporteur de refroidissement. Ainsi, un liquide de refroidissement peut circuler entre les deux pièces concentriques, la machine comportant au moins une entrée et une sortie entre lesquelles circule ledit liquide. On peut d'ailleurs choisir les caractéristiques du fluide caloporteur de manière à accroître encore l'effet d'amortissement.

Les éléments d'amortissement peuvent être également formés par un joint élastique hélicoïdal ou un jonc élastique spiralé sur la longueur du stator entre les surfaces en regard des première et deuxième pièces concentriques.

Outre les deux pièces concentriques précitées, le stator peut comprendre une ou plusieurs pièces intermédiaires concentriques emboîtées, des éléments d'amortissement circonférentiels étant disposés, de la manière indiquée plus haut, dans les espaces annulaires ménagés entre les pièces respectives constituant le stator.

Dans une réalisation particulière, les deux pièces concentriques sont disposées autour d'un paquet de tôles statoriques.

Le stator peut être monté sur une structure d'accueil par celle des deux pièces concentriques qui est la plus extérieure, par l'intermédiaire ou non de flasques d'extrémité. La conception selon la présente invention est particulièrement avantageuse lorsque le stator est monté sur des flasques d'extrémité par la pièce extérieure de son enveloppe.

Dans une réalisation particulière, le stator comporte au moins deux éléments d'amortissement distincts, occupant deux positions axiales différentes sur l'axe du stator.

Le jeu entre les pièces emboîtées peut être égal à 0,1 mm environ, par exemple.

Il est avantageux que le jeu soit faible, car cela permet en cas d'écrasement des éléments d'amortissement d'éviter que le rotor ne percute le stator. De préférence, le jeu entre les deux pièces concentriques sera inférieur à l'entrefer entre le rotor et le stator, celui-ci étant généralement de l'ordre de 0,5 mm.

Dans une réalisation préférée, les moyens d'arrêt comportent au moins un élément rigide solidaire de l'une des pièces et au moins une rondelle s'interposant entre l'autre pièce et l'élément rigide. La machine ne comporte avantageusement aucun pont métallique de transmission des vibrations entre les deux pièces concentriques.

Les moyens d'arrêt peuvent comporter des vis portant chacune une rondelle, la pièce la plus intérieure comportant des perçages dans lesquels peuvent se fixer les vis, la pièce la plus extérieure comportant des ouvertures délimitées par des parois tubulaires, les rondelles portées par les vis s'interposant entre ces dernières et lesdites parois pour permettre la transmission du couple entre les pièces concentriques tout en amortissant les vibrations.

Les rondelles sont avantageusement comprimées axialement de manière à empêcher une fuite de liquide de refroidissement par lesdites ouvertures, la compression axiale de chaque rondelle s'effectuant de préférence entre un épaulement de la vis correspondante et la pièce la plus intérieure.

Les vis peuvent être non équi-réparties angulairement.

Les axes des vis peuvent être dirigés radialement ou parallèlement à l'axe de rotation du rotor.

Le paquet de tôles du stator peut être fixé dans la pièce intérieure par une résine injectée à l'intérieur de ladite pièce, après mise en place du paquet de tôles sans frettage dans ladite pièce.

L'invention a encore pour objet un stator de machine électrique tournante, notamment une machine à réluctance variable, qui se caractérise par le fait qu'il comporte au moins une rondelle disposée autour d'un élément rigide solidaire d'une première pièce du stator, cette rondelle étant disposée au contact d'une paroi solidaire d'une deuxième pièce du stator, concentrique avec la première. L'axe de l'élément rigide peut être parallèle à l'axe de rotation du rotor ou perpendiculaire à celui-ci.

La rondelle peut servir à transmettre le couple entre les deux pièces tout en amortissant les vibrations entre elles, en permettant d'éviter un contact métal/métal.

Avantageusement, la rondelle peut servir également à empêcher un liquide, circulant entre les deux pièces, de s'échapper par une ouverture délimitée par une paroi contre laquelle la rondelle vient en appui à sa périphérie. L'élément rigide peut être une vis et la paroi contre laquelle la rondelle vient en appui à sa périphérie peut définir une ouverture permettant de fixer la vis sur le stator.

Dans le but de mieux faire comprendre l'invention, on va maintenant en décrire des exemples de réalisation nullement limitatifs, en se référant au dessin annexé, dans lequel:
- les figures 1 à 3 sont des vues en coupe schématique illustrant trois modes de réalisation de machine tournante selon l'invention,
- la figure 4 représente de manière schématique, en coupe axiale, un autre exemple de machine tournante selon l'invention,
- la figure 5 est une coupe transversale selon V de la figure 4,
- les figures 6 et 7 sont des vues en perspective représentant une vis d'arrêt et le joint associé, et
- la figure 8 est une coupe axiale d'une vis et du joint associé.

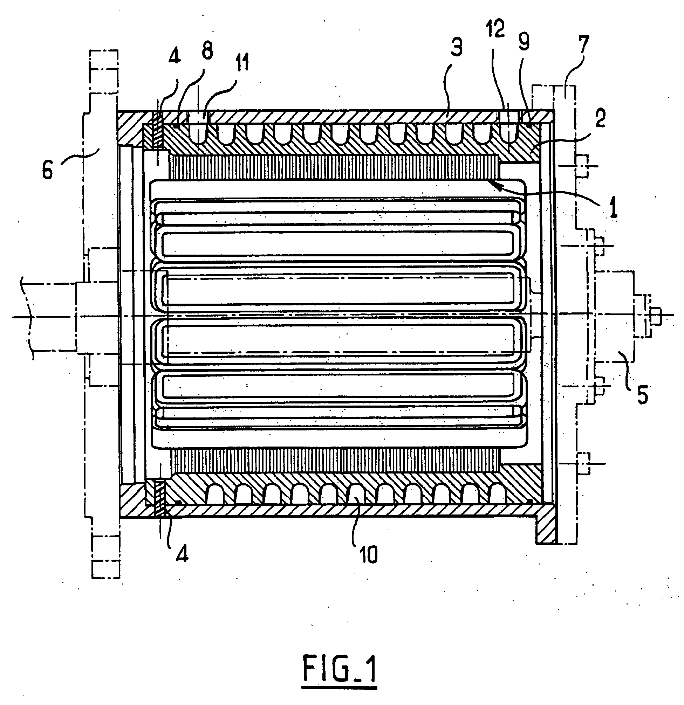

Le stator illustré sur la figure 1 comprend un corps de stator formé d'un empilement de tôles statoriques magnétiques, désigné globalement par 1, et une enveloppe périphérique extérieure pouvant être constituée, selon l'invention, d'une pièce cylindrique, ou carcasse, intérieure 2, et d'une pièce cylindrique, ou carcasse, extérieure 3, la pièce intérieure 2 étant réunie par exemple par frettage ou collage au corps 1 du stator.

Les pièces 2 et 3 constitutives de l'enveloppe du stator sont disposées concentriquement en ménageant un faible jeu entre leurs surfaces en regard, par exemple un jeu de l'ordre de 1/10 mm.

Les pièces 2 et 3 sont positionnées axialement et en rotation par des moyens d'arrêt 4 tels que des goupilles, des vis ou des pions constitués au moins partiellement de matériaux amortissants. Les moyens d'arrêt assurent la transmission du couple du corps du stator à la pièce extérieure 3 de l'enveloppe.

On a schématisé sur la figure 1, en trait interrompu, le rotor 5 tournant à l'intérieur du stator, et des flasques d'extrémité 6 et 7 servant de paliers au rotor, l'enveloppe du stator étant, selon l'invention, en liaison avec une structure d'accueil non représentée, éventuellement par l'intermédiaire desdits flasques. Des joints d'étanchéité annulaires 8, 9 tels que des joints toriques en caoutchouc sont disposés au voisinage des extrémités longitudinales du stator entre les surfaces en regard des pièces 2 et 3 de l'enveloppe de stator.

Un conduit hélicoïdal 10 pour le passage d'un fluide de refroidissement caloporteur tel que de l'eau, éventuellement glycolée, ou de l'huile, est ménagé dans la surface périphérique extérieure de la pièce intérieure 2 du stator, des orifices d'entrée et respectivement de sortie 11 et 12 étant ménagés dans la pièce extérieure 3 pour former un circuit de fluide de refroidissement.

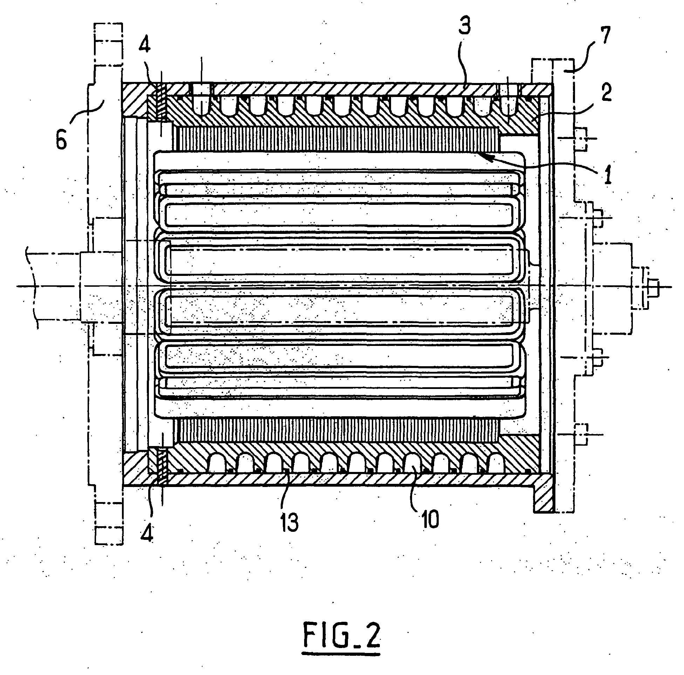

Le mode de réalisation illustré sur la figure 2 diffère essentiellement de celui de la figure 1 par le fait que les joints annulaires 8 et 9 sont remplacés par un joint hélicoïdal 13 s'étendant sur la majeure partie de la longueur du stator entre les pièces 2 et 3 en regard.

Avec une telle configuration de joint on peut le cas échéant pour réaliser le refroidissement se dispenser du conduit 10, le conduit pour le passage d'un fluide de refroidissement pouvant être obtenu par un dimensionnement approprié du joint hélicoïdal ou de forme adaptée et du jeu entre les pièces 2 et 3 en regard, le conduit étant alors ménagé entre ce joint et les surfaces en regard des pièces 2 et 3.

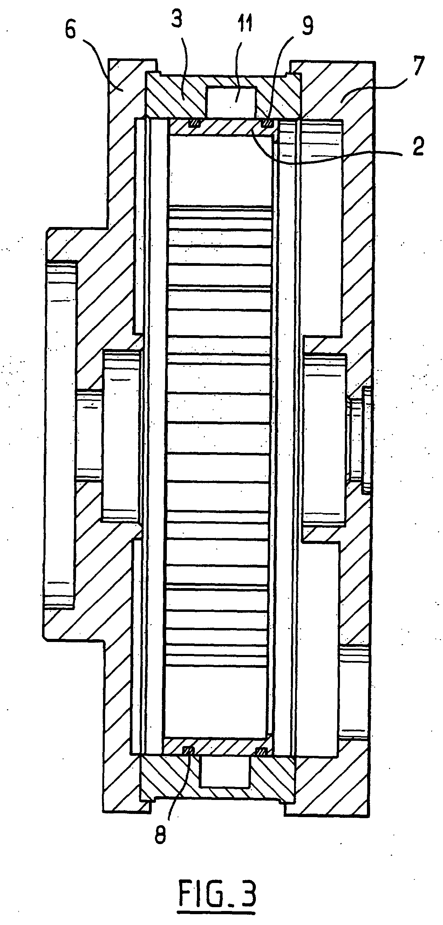

Le mode de réalisation illustré sur la figure 3 diffère essentiellement de celui de la figure 1 par le fait que le conduit hélicoïdal 10 est remplacé par un simple conduit circulaire 11 réalisé en creux sur la pièce extérieure 3.

Si l'on ne désire pas prévoir de refroidissement, il est possible de prévoir d'autres types d'éléments d'amortissement que des joints annulaires fermés, ces éléments d'amortissement étant disposés circonférentiellement entre les surfaces en regard des parties 2 et 3 du stator.

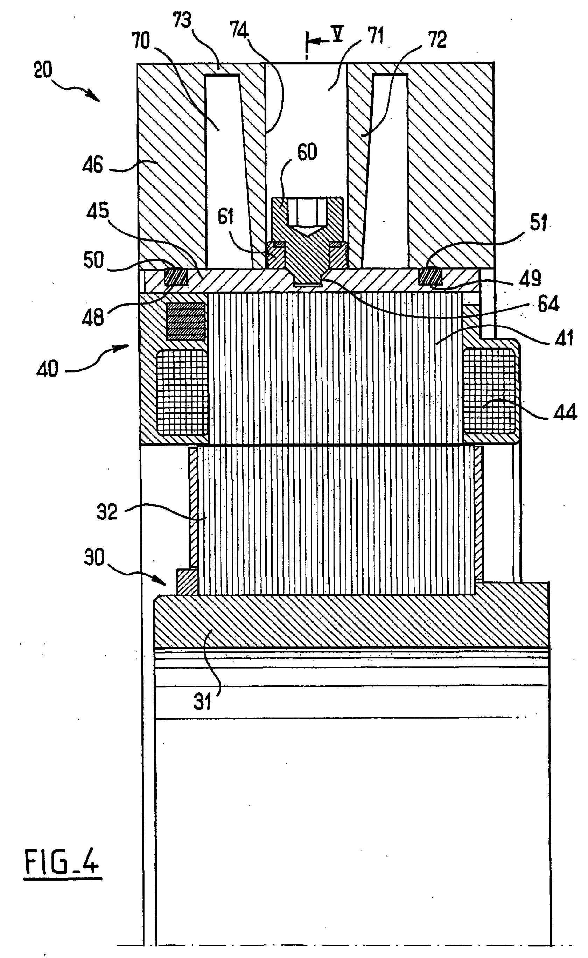

On a représenté sur la figure 4, en coupe axiale, une machine tournante électrique 20 réalisée conformément à l'invention.

Cette machine est dans l'exemple décrit un moteur à réluctance variable, et comporte un rotor 30 et un stator 40. Le rotor 30 comporte un arbre 31 portant un paquet de tôles magnétiques 32.

Le stator 40 comporte un corps comprenant un paquet de tôles magnétiques 41 définissant des dents 42 et des encoches 43 recevant des conducteurs électriques 44. Le paquet de tôles 41 est logé dans une pièce 45 ou carcasse intérieure.

La pièce 45 peut être frettée sur le paquet de tôles 41 ou en variante, et préférentiellement, le paquet de tôles est introduit dans la pièce 45, les bobinages sont mis en place et une résine est injectée et polymérisée à chaud.

Le stator 40 comporte une pièce 46 ou carcasse extérieure, emboîtée sur la pièce 45, avec un jeu entre les deux.

La pièce 45 présente deux gorges annulaires 48 et 49 dans lesquelles sont logés deux joints annulaires respectifs 50 et 51. Le jeu entre la pièce 45 et la pièce 46 est faible, étant de l'ordre de 0,1 mm, et les joints 50 et 51 sont dimensionnés de manière à s'interposer entre les pièces 45 et 46 afin d'éviter que celles-ci ne se touchent, lors du fonctionnement normal de la machine.

Si toutefois les pièces 45 et 46 venaient à se toucher, le jeu entre elles étant inférieur à l'entrefer entre le rotor et le stator, le rotor ne risque pas de percuter le stator.

Des moyens d'arrêt sont prévus pour limiter les mouvements relatifs axiaux et en rotation entre les pièces 45 et 46, pour permettre notamment la transmission du couple de la pièce 45 à la pièce 46, cette dernière étant fixée à une structure d'accueil de la machine, par exemple par l'intermédiaire de flasques d'extrémité.

Dans l'exemple considéré, ces moyens d'arrêt comportent des vis 60 munies chacune d'une rondelle 61 en élastomère.

On a représenté isolément sur les figures 6 et 7 en perspective, et en coupe sur la figure 8, une vis 60 et sa rondelle 61.

Chaque vis 60 comporte à une extrémité une partie filetée 62 destinée à être vissée dans un perçage taraudé 64 de la pièce 45 et à l'autre extrémité un logement 68 agencé pour coopérer avec une clé hexagonale. Le corps de la vis présente un épaulement 66 contre lequel la rondelle 61 peut venir en appui axialement par une face. La rondelle 61 peut incorporer un anneau métallique 80. La rondelle 61 présente à sa périphérie extérieure une série de stries annulaires 67.

Dans l'exemple considéré, les vis 60 sont au nombre de trois et sont disposées à 105° environ les unes des autres, comme on peut le voir sur la figure 5, les axes des vis étant coplanaires, dans un plan situé sensiblement à mi-distance entre les joints 50 et 51.

La pièce extérieure 46 comporte, sur sa face intérieure, une gorge annulaire 70 qui peut permettre de faire circuler entre les pièces 45 et 46 un liquide de refroidissement, les joints 50 et 51 évitant les fuites de liquide par le jeu entre les pièces 45 et 46. La pièce 46 présente, au niveau de chaque vis 60, une ouverture 71 délimitée par une paroi généralement tubulaire 72 qui se raccorde à la paroi 73 de la pièce 46 définissant le fond de la gorge 70.

La paroi 72 présente par exemple une surface intérieure 74 cylindrique de révolution, contre laquelle la rondelle 61 vient en appui par le sommet des stries 67, comme on peut le voir sur la figure 4. La rondelle 61 s'interpose ainsi radialement entre la vis 60 et la paroi 72 et permet de transmettre le couple tout en évitant la transmission des vibrations de la vis 60 à la pièce 46. La rondelle 61 permet également d'assurer une fermeture étanche de l'ouverture 71 au niveau de la pièce 45 et donc d'éviter une fuite du liquide de refroidissement par l'ouverture 71.

Bien que l'invention ait été décrite en liaison avec des modes de réalisation particuliers, il est bien évident qu'elle n'y est nullement limitée et qu'on peut lui apporter différentes variantes et modifications sans pour autant sortir ni de son cadre ni de son esprit.

On peut disposer des éléments élastiques d'amortissement entre le corps de stator et la pièce intérieure de l'enveloppe, et conserver les joints entre les pièces intérieure et extérieure.

On dispose alors de deux étages d'amortissement des vibrations et l'on peut choisir les propriétés des éléments élastiques d'amortissement de chaque étage de manière à filtrer des fréquences de vibration différentes.

## Revendications

1. Stator de machine électrique tournante, notamment de machine électrique tournante à réluctance variable, comprenant un corps de stator comportant un paquet de tôles statoriques et une première et une deuxième pièces concentriques emboîtées et disposées à jeu autour du corps de stator, des éléments élastiques d'amortissement étant disposés entre les deux pièces, **caractérisé par le fait que** les éléments élastiques d'amortissement (8, 9 ; 13 ; 50, 51) sont disposés circonférentiellement autour de la pièce (2 ; 45) la plus intérieure des deux entre la surface extérieure de cette pièce et la surface intérieure en regard de l'autre pièce (3 ; 46), et **par le fait que** les mouvements relatifs entre les deux pièces sont limités axialement et circonférentiellement par des moyens d'arrêt (4 ; 60, 61) offrant des propriétés amortissantes.

2. Stator selon la revendication 1, **caractérisé par le fait que** les éléments d'amortissement sont constitués par des joints annulaires (8, 9; 50, 51).

3. Stator selon la revendication 2, **caractérisé par le fait que** les joints annulaires sont au nombre de deux.

4. Stator selon la revendication 1, **caractérisé par le fait que** les éléments d'amortissement sont constitués par un joint élastique hélicoïdal (13) ou un jonc élastique spiralé sur la longueur du stator entre les surfaces en regard des deux pièces.

5. Stator selon l'une quelconque des revendications précédentes, **caractérisé par le fait qu'**il est monté sur une structure d'accueil par la pièce (3 ; 46) la plus extérieure du stator.

6. Stator selon la revendication 5, **caractérisé par le fait qu'**il est monté sur la structure d'accueil par l'intermédiaire de flasques d'extrémité (6, 7).

7. Stator selon l'une quelconque des revendications 1 à 6, **caractérisé par le fait que** des éléments élastiques d'amortissement supplémentaires sont disposés au contact du paquet de tôles statoriques et de l'une desdites pièces concentriques.

8. Stator selon l'une quelconque des revendications précédentes, **caractérisé par le fait qu'**il comporte, outre les deux pièces, une ou plusieurs pièces intermédiaires concentriques emboîtées, des éléments d'amortissement circonférentiels étant disposés dans les espaces annulaires ménagés entre les pièces respectives constituant le stator.

9. Stator selon l'une quelconque des revendications précédentes, **caractérisé par le fait que** les moyens d'arrêt comportent au moins un élément rigide (60) solidaire de l'une des pièces (45, 46) et au moins une rondelle offrant des propriétés amortissantes (61) s'interposant entre l'autre pièce (46 ; 45) et l'élément rigide (60).

10. Stator selon la revendication précédente, **caractérisé par le fait que** la rondelle (61) présente des stries (67) à sa périphérie.

11. Stator selon l'une quelconque des revendications précédentes, **caractérisé par le fait que** les moyens d'arrêt comportent des vis (60) portant chacune une rondelle (61), la pièce la plus intérieure (45) comportant des perçages (64) dans lesquels peuvent se fixer les vis (60), la pièce la plus extérieure (46) comportant des ouvertures (71) délimitées par des parois tubulaires (72), les rondelles (61) portées par les vis s'interposant entre ces dernières et lesdites parois (72) pour permettre la transmission du couple entre les pièces concentriques (45, 46) tout en amortissant les vibrations.

12. Stator selon la revendication précédente, **caractérisé par le fait que** l'axe d'une vis au moins est radial.

13. Stator selon la revendication 11, **caractérisé par le fait que** l'axe d'une vis au moins est parallèle à l'axe de rotation du rotor.

14. Stator selon l'une quelconque des revendications 11 à 13, **caractérisé par le fait que** les rondelles (61) sont comprimées axialement de manière à empêcher une fuite d'un liquide de refroidissement par lesdites ouvertures (71), la compression axiale de chaque rondelle (61) s'effectuant de préférence entre un épaulement (66) de la vis correspondante (60) et la pièce la plus intérieure (45).

15. Stator selon l'une quelconque des revendications précédentes, **caractérisé par le fait que** le paquet de tôles (41) du stator est fixé dans la pièce intérieure (45) par une résine injectée à l'intérieur de ladite pièce (45) après mise en place du paquet de tôles sans frettage dans ladite pièce (45).

16. Stator selon l'une quelconque des revendications précédentes, **caractérisé par le fait qu'**un liquide de refroidissement circule entre les deux pièces concentriques (2, 3 ; 45, 46).
